# EUROPEAN PATENT APPLICATION

(11) **EP 3 331 186 A1**
(43) Date of publication of application: **06.06.2018**
(21) Application number: 16306594.9
(22) Date of filing: 01.12.2016
(51) Int. Cl.: H04L 1/18, H04L 12/861, H04L 12/883, H04L 12/879, H04L 12/26

(54) **DEVICE AND METHOD FOR BUFFERING REPORTS**

(71) Applicant: Thomson Licensing, 92130 Issy-les-Moulineaux (FR)
(72) Inventor: NEUMANN, Christoph, 35576 Cesson Sévigné (FR); LE GUYADEC, Pascal, 35576 Cesson Sévigné (FR)
(74) Representative: Ståhl, Björn Niclas

(57) **Abstract**

A device (100) that is configured to generate reports to send to a server comprises at least one processor (111) configured to generate the reports. Upon loss of connection, generated reports are stored in a buffer (1121) in memory (112) of the device (100), capable of storing k reports. The first generated report is stored in a first part of the buffer (1121), a most recently generated report is stored in a second part of the buffer, while the remaining reports are stored in a third part of the buffer. When the third part is full, a sampling algorithm is used to select the *k*-2 reports to store in the third part.

## Description

### TECHNICAL FIELD

The present disclosure relates generally to device monitoring and in particular to devices providing reports to a monitoring device via a network connection.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

There are instances where an operator or other entity desires to monitor deployed devices. Non-limiting examples of such devices are gateways and set-top boxes. During operation, such devices typically send reports with different measurements and metrics to the head-end. Such reports can be generated at regular intervals, for example every minutes or once every ten minutes. The operator typically uses the information in these reports to diagnose failures, errors and malfunction of the monitored devices. A gateway that is disconnected is of particular interest to the operator since the disconnection disrupts the operation of the gateway. The operator then tries to diagnose the cause of disconnection: is it due to some error in the network or some local error on the gateway? Or did the user simply shut down the gateway?

However, a problem occurs when there is no connection between a device and the head-end, since the device then cannot send the reports.

To overcome this problem, a conventional solution makes use of a ring buffer to store the reports during the time without connection in order to transmit them once the connection has been re-established. But such a ring buffer has limited storage capacity, which means that the first reports will be overwritten if the time without connection is too long. It can then be impossible for the operator to determine when the device disconnected; it may for example have been switched off by the user.

A first attempt to solve this problem includes setting a flag to notify the head-end of the occurrence, but this provides very limited information. A second attempt is to compress the reports so that they occupy less memory space, but this just makes it possible to store more reports in the ring buffer; if the time without connection is long enough, the ring buffer will still overflow.

Hence, conventional monitoring mechanisms do not always provide sufficient information to the operator.

It will be appreciated that it is desired to have a solution that overcomes at least part of the conventional problems related to monitoring of connected devices.

### SUMMARY OF DISCLOSURE

In a first aspect, the present principles are directed to a device comprising memory that comprises a buffer configured to store k reports generated by at least one processor of the device, a communications interface configured to send generated reports to a further device when a connection is available, and the at least one hardware processor configured to generate the reports, and when the connection is not available, store generated reports in the buffer. The at least one hardware processor is further configured to store a first report, first generated after loss of the connection, in a first part of the buffer, a report that is most recently generated in a second part of the buffer, and *k*-2 reports in a third part of the buffer.

Various embodiments of the first aspect include:
- That the at least one hardware processor is further configured to instruct, when the connection becomes available, the communications interface to send reports stored in the buffer via the communications interface to a server.
- That the at least one hardware processor is configured to, after storage of the first report, write a most recent report in the second part of the buffer upon retrieval of the report stored in the second part of the buffer for input to a function for storage in the third part of the buffer.
- That the at least one hardware processor is configured to retain a most recent report, and before a further report is to be generated, use the most recent report as input to a function for storage in the third part of the buffer. The function can further take as input the reports stored in the third part of the buffer. The function can be a sampling algorithm.
- That the device is a gateway or a set-top box.

In a second aspect, the present principles are directed to a method comprising at a device generating, by at least one hardware processor a report intended for a further device, storing, when a connection to the further device is unavailable, the report in a buffer of a memory configured to store k reports generated by the at least one processor, and sending, by a communications interface, reports stored in the buffer to the further device when the connection is available. The at least one hardware processor stores a first report, first generated after loss of the connection, in a first part of the buffer, a report that is most recently generated in a second part of the buffer, and *k*-2 reports in a third part of the buffer.

Various embodiments of the second aspect include:
- That the at least one hardware processor, after storage of the first report, stores a most recent report in the second part of the buffer upon retrieval of the report stored in the second part of the buffer for input to a function for storage in the third part of the buffer.
- That the at least one hardware processor retains a most recent report, and before a further report is to be generated, uses the most recent report as input to a function for storage in the third part of the buffer. The function can further take as input the reports stored in the third part of the buffer. The function can be a sampling algorithm.

In a third aspect, the present principles are directed to a computer program comprising program code instructions executable by a processor for implementing the steps of a method according to any embodiment of the second aspect.

In a fourth aspect, the present principles are directed to a computer program product which is stored on a non-transitory computer readable medium and comprises program code instructions executable by a processor for implementing the steps of a method according to any embodiment of the second aspect.

### BRIEF DESCRIPTION OF DRAWINGS

Preferred features of the present principles will now be described, by way of non-limiting example, with reference to the accompanying drawings, in which:
Figure 1 illustrates an exemplary device according to a first embodiment of the present principles;
Figure 2 illustrates an exemplary method for report buffering according to a preferred embodiment of the present principles; and
Figure 3 further illustrates part of the method illustrated in Figure 2.

### DESCRIPTION OF EMBODIMENTS

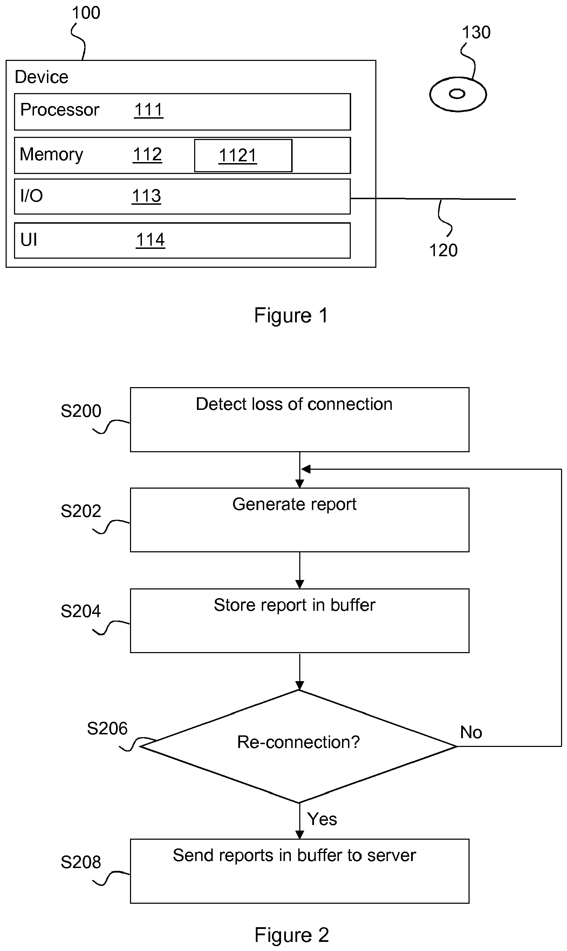

Figure 1 illustrates an exemplary device 100 according to a first embodiment of the present principles. As already mentioned, the device 100 can for example be a gateway or a set-top box.

The device 100 includes at least one hardware processing unit ("processor") 111, memory 112, a communications interface ("I/O") 113 configured for communication with a head-end server (not shown) over connection 120. Depending on the implementation, the device 100 can further include a user interface (UI) 114 and features depending on its function. For example, a gateway will typically include at least one network interface configured to connect to devices (not shown) in a network, such as a Wi-Fi network. The memory 112 is configured to store the instructions for execution by the processor 111.

Non-transitory storage media 130 stores instructions that, when executed by a processor, perform the functions of the processor 111 further described hereinafter. The storage media 130, which can be located in a remote location, can be connected, directly or indirectly, to the device in order to download the instructions.

The skilled person will appreciate that the illustrated devices are very simplified for reasons of succinctness and that real devices in addition would comprise features such as internal connections and power supplies.

The processor 111 is configured to generate reports with measurements and metrics related to the operation of the device 100. For example, a Wi-Fi gateway could compile information about interference in the Wi-Fi network it manages and about the quality of the connection 120. As mentioned, such reports are typically generated at regular intervals, such as once every minute.

The processor 111 is also configured to monitor, directly or indirectly, its connectivity over connection 120, i.e., if connection 120 is up or down. Several conventional methods to monitor the connection exist. It is for example possible for the processor 111 to observe if it is able to send the generated reports to the server. It is also possible for the communications interface 113 to check the link layer status as reported by its driver (e.g., DSL link is reported "Up" or "Down").

The processor 111 is configured to send the generated reports via communications interface 113 over the connection 120 to the server, preferably soon after the generation so that a report is sent before the next report is generated.

However, as already explained, the device 100 cannot send the reports when connection 120 to the server is down. In this case, the processor 111 is configured to store generated reports in a buffer 1121 of the memory 112. Without loss of generality, it is assumed that the buffer 1121 is big enough to store k reports, where k can be 2, but preferably at least 3; the skilled person will appreciate that the present principles work better when the buffer 1121 is capable of storing a greater number or reports, say at least 10 or 15.

The processor 111 is configured to store generated reports in the buffer 1121 as follows during a time without connection:
- The first report generated after loss of the connection is stored in a first part of the buffer.
- Starting from the second generated report, the most recently generated report is stored in a second part of the buffer.
- When a subsequent report has been generated, the report in the second part of the buffer is stored in a third part of the buffer, with space for k-2 reports, in order of generation, as long as the third part of the buffer is not already full. If the third part of the buffer is full, a sampling algorithm (described hereinafter) is used to determine which report to drop among the reports in the third part of the buffer and the report from the second part of the buffer. Once the report in the second part of the buffer has been moved, the subsequent report is stored in the second part of the buffer.

It will be appreciated that the buffer 1121 can be distributed over a plurality of physical memory modules. In particular, the second part can be implemented in the memory used by the processor 111, while the rest of the buffer can be implemented in other memory. Thus, in a variant, the most recently generated report is kept by the second part of the buffer in the memory of the processor 111 until it is detected that the connection 120 has been re-established. However, as long as the connection 120 remains down, the generated reports, with the exception of the first report and the most recently generated report, are stored in the third part of the buffer, if necessary using the sampling algorithm to do so.

When the connection 120 is re-established, the processor 111 sends the reports in the buffer 1121 to the server.

A first example of the sampling algorithm is to select the report to delete among the ones in the third part of the buffer and the report to store in this buffer with equal probability (1/(*k*-2+1)=1/(*k*-1)). When the report to delete was one of the reports in the third part of the buffer, the "following" ones are moved toward the beginning of the buffer and the report to store is stored in the last place.

The sampling algorithm may for example be based on the algorithm for reservoir sampling introduced by Vitter [see Vitter, Jeffrey S. (1 March 1985). Random Sampling with a Reservoir. ACM Transactions on Mathematical Software. 11 (1): 37-57. doi:10.1145/3147.3165]. Reservoir sampling allows uniform sampling of n elements or data items (with *n* = *k*-2 according to the present principles) from a continuous stream of elements or data items (i.e., reports), without a priori knowledge of the length of the stream. The algorithm is:

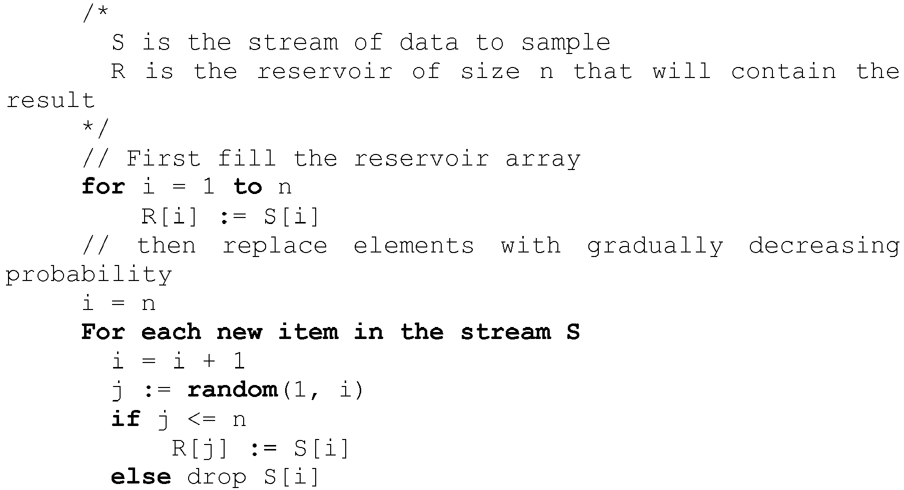

Figure 2 illustrates an exemplary method for report buffering according to a preferred embodiment of the present principles. The method may be performed by the processor 111 of the device 100.

In step S200, loss of connection 120 is detected, which means that generated reports cannot be sent until the connection (or an alternative connection) is re-established.

In step S202, a report is generated and stored, in step S204, in a buffer (1121 in Figure 1). In step S206, it is determined if the connection has been re-established. If this is the case, the reports stored in the buffer are sent, in step S208, to the server. If the connection has not been re-established, a new report will eventually be generated in step S202 and the relevant steps are performed again.

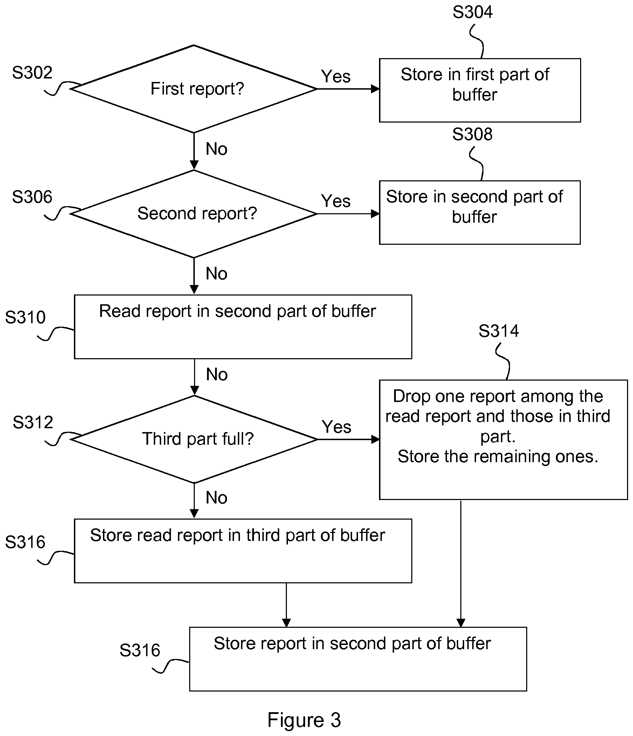

Figure 3 further illustrates step S204 of the method illustrated in Figure 2.

In step S302, it is determined if the generated report is the first report generated after the loss of connection. If so, the generated report is stored, in step S304, in a first part of the buffer.

If the generated report is not the first, it is determined, in step S306, if the generated report is the second report. If so, the generated report is stored, in step S308, in a second part of the buffer.

If the the generated report is not the second, the report stored in the second part of the buffer is read, in step S310. It is then determined, in step S312, if a third part of the buffer is full.

If the third part is not full, in step S316, the read report is stored in the third buffer. If the third part is full, in step S314, one of the reports in the third part and the read report is dropped and the remaining reports are stored in the third part. In either case, then, in step S318, the generated report is stored in the second buffer

As will be appreciated, the present principles can enable improved reporting for times during which a device was unable to send reports to a server.

Using the present principles, it is likely that, despite memory limitations, the gathered reports represent the entire disconnect period (without bias for a particular period). In addition, the operator can reliably determine when the disconnect and the reconnect occurred.

Put another way, the server can receive a set of reports that uniformly covers the entire disconnect period, including the first and last report, which can allow the operator to calculate the actual disconnect time and provide the operator with a set of metrics that are representative of the entire disconnect period.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

## Claims

1. A device (100) comprising:
memory (112) comprising a buffer (1121) configured to store k reports generated by at least one processor (111) of the device;
a communications interface (113) configured to send generated reports to a further device when a connection (120) is available; and
at least one hardware processor (111) configured to:
generate the reports; and
when the connection (120) is not available, store generated reports in the buffer (1121);
wherein, the at least one hardware processor (111) is configured to write a first report, first generated after loss of the connection (120), in a first part of the buffer (1121), a most recently generated report in a second part of the buffer (1121), and *k*-2 reports in a third part of the buffer (1121).

2. The device of claim 1, wherein the at least one hardware processor (111) is further configured to instruct, when the connection (120) becomes available, the communications interface to send reports stored in the buffer via the communications interface (113) to a server.

3. The device of claim 1 or 2, wherein the at least one hardware processor (111) is configured to:
after storage of the first report, write a most recently generated report in the second part of the buffer upon retrieval of the report stored in the second part of the buffer for input to a function for storage in the third part of the buffer.

4. The device of claim 1, wherein the at least one hardware processor (111) is configured to:
retain a most recently generated report; and
before a further report is to be generated, use the most recently generated report as input to a function for storage in the third part of the buffer.

5. The device of one of claims 3 and 4, wherein the function further takes as input the reports stored in the third part of the buffer (1121).

6. The device of one of claims 3 and 4, wherein the function is a sampling algorithm.

7. The device of one of the previous claims, wherein the device is a gateway or a set-top box.

8. A method comprising at a device (100):
generating (S202), by at least one hardware processor (111) a report intended for a further device;
storing (S204), when a connection (120) to the further device is unavailable, the report in a buffer (1121) of a memory (112) configured to store k reports generated by the at least one processor (111); and
sending (S208), by a communications interface (113), reports stored in the buffer (1121) to the further device when the connection (120) is available; and wherein, the at least one hardware processor (111) stores a first report, first generated after loss of the connection (120), in a first part of the buffer (1121), a report that is most recently generated in a second part of the buffer (1121), and *k*-2 reports in a third part of the buffer (1121).

9. The method of claim 8, wherein, after storage of the first report, the at least one hardware processor stores a most recent report in the second part of the buffer upon retrieval of the report stored in the second part of the buffer for input to a function for storage in the third part of the buffer.

10. The method of claim 8, wherein the at least one hardware processor (111) retains a most recent report and, before a further report is to be generated, use the most recent report as input to a function for storage in the third part of the buffer.

11. The method of one of claims 9 and 10, wherein the function further takes as input the reports stored in the third part of the buffer (1121).

12. The method of one of claims 9 and 10, wherein the function is a sampling algorithm.

13. Computer program comprising program code instructions executable by a processor for implementing the steps of a method according to at least one of claims 8 and 12.

14. Computer program product which is stored on a non-transitory computer readable medium and comprises program code instructions executable by a processor for implementing the steps of a method according to at least one of claims 8 and 12.
